# EUROPEAN PATENT SPECIFICATION

(11) **EP 1 340 400 B1**
(45) Date of publication and mention of the grant of the patent: **10.12.2008**
(21) Application number: 01975114.8
(22) Date of filing: 05.10.2001
(51) Int. Cl.: H04Q 7/38

(54) **METHOD OF IMPROVING THE PERFORMANCE BETWEEN ONE MOBILE STATION AND A BASE STATION BY SELECTIVE SETTING OF THE RETRANSMISSION TIME-OUT VALUES**
VERFAHREN ZUR VERBESSERUNG DER LEISTUNG ZWISCHEN EINER MOBILSTATION UND EINER BASISSTATION DURCH SELEKTIVES EINSTELLEN DER NEUÜBERTRAGUNGS-ZEITGRENZWERTE
PROCEDE D'AMELIORATION DE LA QUALITE DE TRANSMISSION ENTRE UNE STATION MOBILE ET UNE STATION DE BASE PAR REGLAGE SELECTIF DES VALEURS DE TEMPORISATION DE RETRANSMISSION

(30) Priority: 17.10.2000 SE 0003756
(43) Date of publication of application: 03.09.2003
(73) Proprietor: TELEFONAKTIEBOLAGET LM ERICSSON (publ), 164 83 Stockholm (SE)
(72) Inventor: BACKLUND, Ingemar, 191 44 Sollentuna (SE)
(74) Representative: Kühn, Friedrich Heinrich
(86) International application number: PCT/SE2001/002187
(87) International publication number: WO 2002/034002

(56) References cited:
- EP-A1- 0 355 243
- WO-A1-99/22477
- US-A- 5 774 479
- US-A- 6 111 886

## Description

### TECHNICAL FIELD OF THE INVENTION

The present invention relates generally to a method of setting time-out values in a mobile, radio communication system. More specifically, the method is intended to improve the performance between one mobile station (MS) and a base station (BS) (also known as a base transceiver station BTS) by selective setting of the retransmission time-out values.

### DESCRIPTION OF RELATED ART

Retransmission time-out is used frequently to handle situations were a message is sent from a sender to a receiver and no confirmation of the sent message is received from the receiver after a predetermined time. When a message, e.g. a data packet, is sent from a sender a timer is started. If an answer from the receiver, confirming the sent message, is not received within a predetermined time, based on the timer, then a time-out has occurred. The time-out will then activate a procedure, decided beforehand, e.g. a retransmission of the previously sent message. The procedure of retransmission is often used when data packets are sent from one node, the sender, to another node, the receiver, and the sender does not know if the message was received by the receiver or if the return message, sent by the receiver, was not received within a predefined time. After the retransmission of the data packet is done one of the following can happen: either an answer is received from the receiver within a predefined time or no message is received. If no message is received then another attempt to retransmit the original message can be done and if the number of retransmission has reached a certain limit then no retransmission procedure will be activated. Instead, e.g. disconnect of the connection, between the sender node and the receiver node, can be done. The number of retransmissions, before e.g. disconnect, is decided beforehand. The procedure of using retransmission with time-out is used in a numerous radio communication and computer systems.

One way of using such an arrangement is in a GPRS (General Packet Radio Services) system. In GPRS, a layered protocol architecture is introduced to provide communication services. Error detection and recovery is executed between the GPRS node SGSN (Serving GPRS Support Node) and the MS node by using the LLC (Logical Link Control) protocol. In this example, according to the ISO 7-layer model, the LLC is layer-2 and one purpose of the LLC is to transfer information on behalf of layer-3 entities residing in the MS and the SGSN. The LLC shall among other things provide different functions, e.g. sequence control, detection of transmission, format and operational errors and recovery from these errors. In this example the timer T200 Parameter, described in "ETSI TS 101 351 v8.3.0 (2000-03) Digital cellular telecommunications system (Phase2+); General Packet Radio Service (GPRS); Mobile Station - Serving GPRS Support Node (MS-SGSN) Logical Link Control (LLC) Layer specification (GSM 04.64 version 8.3.0 Release 1999)", is used as a retransmission time-out value, and is used in the LLC protocol and it triggers after error detection the recovery of LLC PDUs (Protocol Data Units) between the SGSN LLC entity and the MS LLC entity. This is done for uplink, in this case from the MS node to the SGSN node, and for downlink, in this case from the SGSN node to the MS node. Retransmission of PDUs in the LLC protocol is triggered by several mechanisms; one mechanism is based on time-out. The LLC retransmission time-out value is set to a fixed value that can be related to the Quality of Service parameters. The value for the T200 parameter can for various Qualities of Services vary e.g. in the range from 5 to 40 seconds. Timer T200 shall include the time to transmit a frame with a certain length on the bandwidth available in the sending direction, the processing time for the PDUs in the LLC entities and the time to transmit a response frame with a certain length on the bandwidth available in the reverse direction, plus an extra value to assure that T200 is greater than the maximum value for the exchange of command and response frames. On the other hand it should not be too large because this will unnecessary delay the retransmission of the PDUs and result in degraded throughput for the LLC service user.

Article "A packet media access protocol for mobile networks" describes a technique where the retransmissions are controlled by the LLC-layer. The probability that data packets and/or ack-packets are lost is calculated. It is possible to set priorities based upon different retransmission probabilities and this method could be used when the system is heavily loaded.

Another technique is described in US 5 918 002 where a selective retransmission protocol is used for computer networks including Local Area Networks (LANs) and Wide Area Networks (WANs). When the client computer detects that a data packet has not been received it calculates a round trip time for the data packet. Depending on the round trip time and the time remaining before the data packet is useless for the application a decision is made to either send the retransmission request or not.

Also in US-A-5 774 479 a method of providing a remote procedure call from a client to a server via an unreliable communication channel using a plurality of retransmission timers is disclosed.

### SUMMARY OF THE INVENTION

A problem is that fixed default values for the retransmission time out are not optimized. The fixed default values do not take into account the available and variable radio resources. Performance loss results from both too long and too short values for the retransmission time-out. Another problem is that setting the same retransmission time-out value for both uplink and downlink communication can result in too high a retransmission time-out value so that the bandwidth will not be used efficiently.

An object of the present invention is to provide ways of optimizing the usage of the bandwidth in the uplink and downlink directions.

This object is achieved by a method and a communication system according to claims 1 and 8 respectively.

### DESCRIPTION OF THE DRAWINGS

Figure 1 illustrates a part of a mobile radio communication system in which the inventive method is applied.
Figure 2 illustrates an XID parameter field format, according to prior art, which is used to send the retransmission time-out parameter between the LLC nodes in which the inventive method is applied.
Figure 3 illustrates a model of layering the protocol in a GPRS system in which the inventive method is applied.
Figure 4 illustrates the T200U and T200D parameters that are used by the inventive method.
Figure 5 illustrates a communicating scheme between two LLC entities, separated by a medium in a mobile radio communication system in which the inventive method is applied.
Figure 6 illustrates a communicating scheme between two LLC entities, separated by a medium in a mobile radio communication system in which the inventive method is applied.
Figure 7 illustrates communicating scheme between two LLC nodes, separated by a medium in a mobile radio communication system in which the inventive method is applied.
Figure 8 illustrates the XID frame format used to send the XID parameters between the LLC nodes in which the inventive method is applied.
Figure 9 illustrates the SABM frame format used to send the XID parameters between the LLC nodes in which the inventive method is applied.
Figure 10 illustrates the flowchart showing the procedure for measuring and negotiating the time-out values with in which the inventive method is applied.

### DESCRIPTION OF PREFERRED EMBODIMENTS

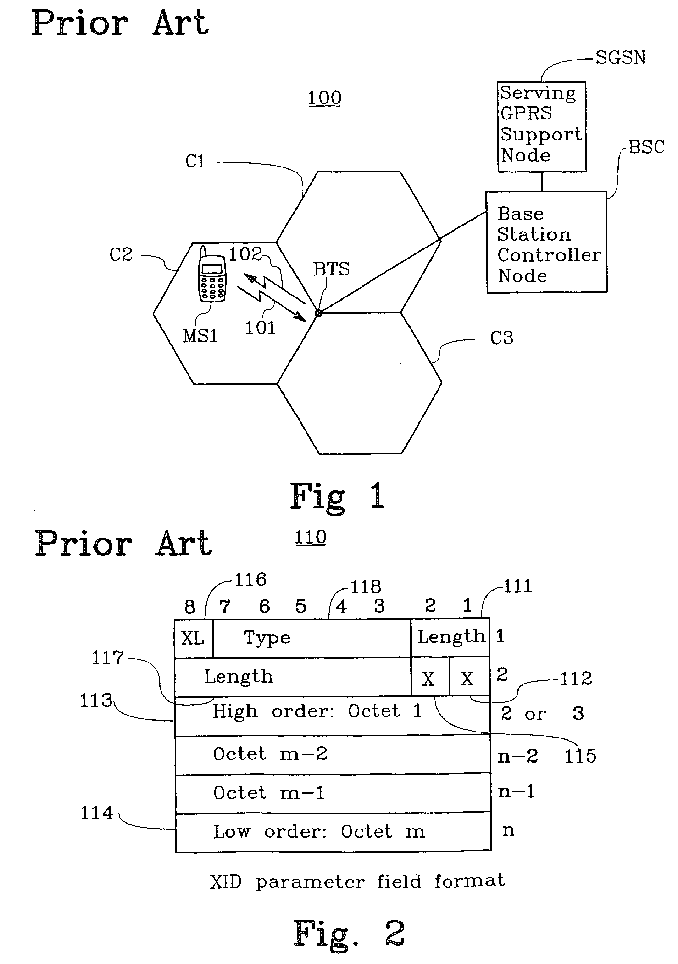

Figure 1 illustrates a part of a mobile cellular radio system 100 in which the inventive method is applied. In this example the mobile station MS1 communicates with the base transceiver station BTS via an air interface. The communication is done uplink 101, that is from MS1 to BTS and downlink 102, that is from BTS to MS1. The MS1 can be in any cell in a public land mobile network (PLMN). BTS is connected to the base station controller node BSC via e.g. a fixed network or a satellite link. BSC is connected to the serving GPRS support node SGSN via e.g. a fixed network. The BSC and the BTS belongs to a system called the base station system (BSS). It is assumed that the bandwidth over the air interface, between MS and BSC will vary depending on e.g. MS location in the cell C1. It is also assumed that the MS can be in any cell, which in this example are C1, C2 and C3.

Figure 2 illustrates the XID (Exchange Identification) parameter fields format 110, described in the ETSI document, mentioned above, chapter 6.4.1.6. The XID parameter fields format 110 is e.g. used in the invention for sending the retransmission time-out values from the MS1 to the SGSN and from the SGSN to the MS1. The XID parameter fields format 110 is built up of octets and the number of octets is n. Each octet consists of 8 bits, that is, bit 1 to bit 8. The XID parameter field format 110 consists of the following parts. The field 116 specifies whether the XID length field 111 and 117 is 2 bits or 8 bits long. The fields 112 and 115 contain no valid data. The data fields 113 start with octet 1, which is the highest order of the data sent and ends with octet m in field 114, which has the lowest data order. The field 118 specifies what kind of message that is sent from the sender to the receiver. This makes it possible for the receiver to recognize what kind of actions it should take and how to interpret the parameter fields of the XID.

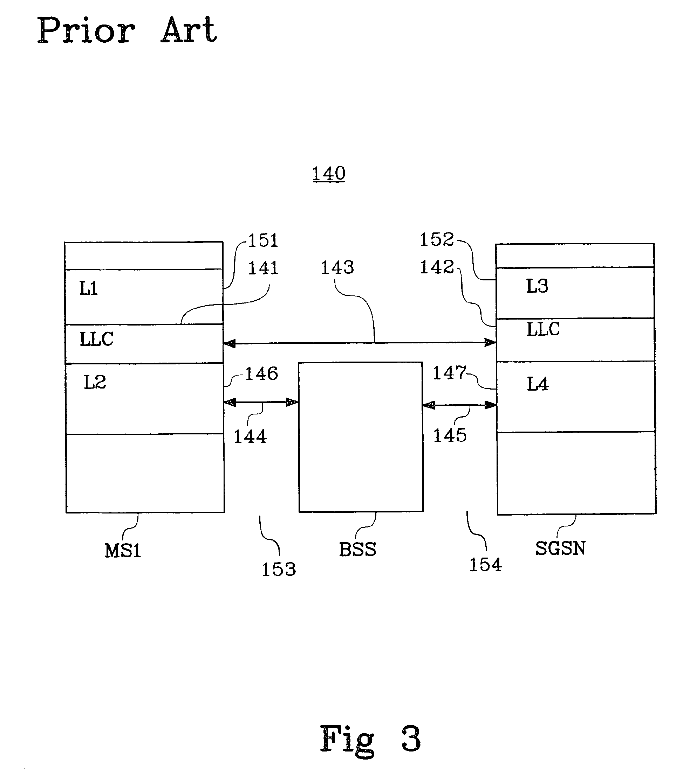

Figure 3 shows the protocol layers 140 in a GPRS-system in which the present invention is used. There are three nodes; a mobile node represented by a mobile station represented by the MS1, a base station node represented by the BSS and a GPRS node represented by the serving GPRS support node SGSN. The LLC-protocol used in MS1 is designated LLC and is found in the field 141 of the total Link Protocol of MS1. This protocol is described in the ETSI document, mentioned above, and positioned in the Reference model as depicted in figure 1 of chapter 4.1. The field 141 is a layer-2 protocol in the ISO 7-layer model. Above the protocol field 141 is another layer, according to the specification mentioned above, designated L1 151. Below protocol field 141 is another layer field 146, according to the specification mentioned above, designated L2. The LLC-protocol used in SGSN is designated LLC and is found in the field 142 of the protocol suite of SGSN. This protocol is described in the ETSI document, mentioned above, chapter 4.1. The field 142 is a layer-2 protocol in the ISO 7-layer model. Above the protocol field 142 is another layer field 152, according to the specification mentioned above, designated L3. Below the protocol field 142 is another layer field 147, according to the specification mentioned above, designated L4. The logical link connection 143 represents the communication path between MS1 and SGSN by means of LLC protocols. The communication path 145 represents the path, by which the LLC protocol is using between SGSN and BSS via L4. The communication path 144 represents the path, by which the LLC protocol is using between MS1 and BSS via L2. The physical connection of the interface 154 operating between BSS and SGSN can be e.g. a copper cable, which has a fixed delay and bandwidth. The interface 153 is an air interface between MS1 and BSS. There is no physical connection, e.g. cable, connecting MS1 with BSS. The main task for LLC protocol in 140 is to convey information data between L1, field 151, entities and L3, field 152, entities and vice versa. Another task is to provide information transfer between an LLC, field 141, entity and an LLC, field 142, entity via the logical link connection 143 and vice versa. Node BSS operates between nodes MS1 and SGSN. The LLC PDUs, which are transferred between field 141 and field 142, are transparent and not affected by BSS.

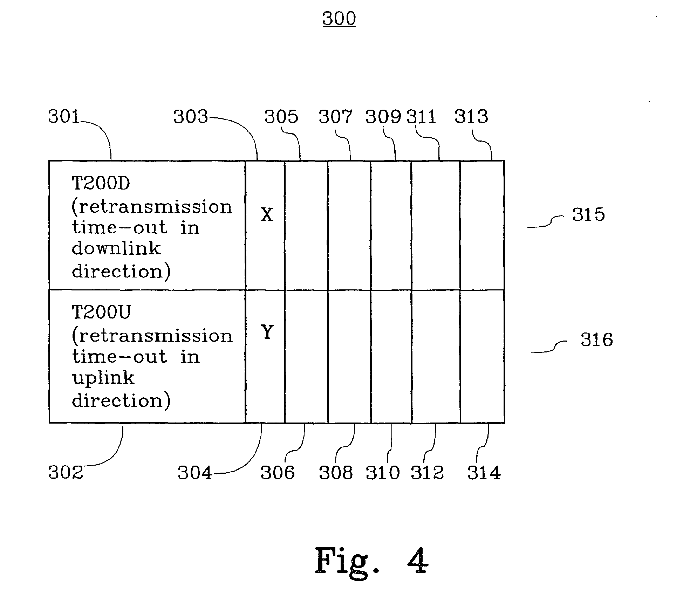

Figure 4 illustrates the parameters used in the downlink and uplink communication according to the invention. Some LLC layer associated parameters will be included in the XID parameter field 110. According to the invention, a parameter T200D, field 301 is representing retransmission time-out in downlink direction and a parameter T200U, field 302, is representing retransmission time-out in uplink direction. Both parameters T200D and T200U replace the T200 parameter. According to the invention the type for parameter T200D is designated X in field 303 which e.g. can be 3 and for parameter T200U it is designated Y in field 304 which e.g. can be 13. Additional parameter fields are the length fields 305 and 306, which designates the actual number of octets of the value sent, the format fields 307 and 308 which designates how the value bits are arranged, the range fields 309 and 310 which describes the range of the value, the units fields 311 and 312 which describes the interpretation of the value, e.g. 10 means 1 second. Also associated is a rule to define a "sense of negotiation", fields 313 and 314, described in the ETSI document, mentioned above, chapter 6.4.1.6. table 6, which describes if the highest or lowest value have precedence in a negotiation. E.g. if "sense of negotiation" is "up" and the sending LLC entity 401 suggests 4 seconds time-out for a connection and receiving LLC entity 402 suggests 5 seconds time-out for said connection then it is highest value, that is 5 seconds that will be the time-out for said connection.

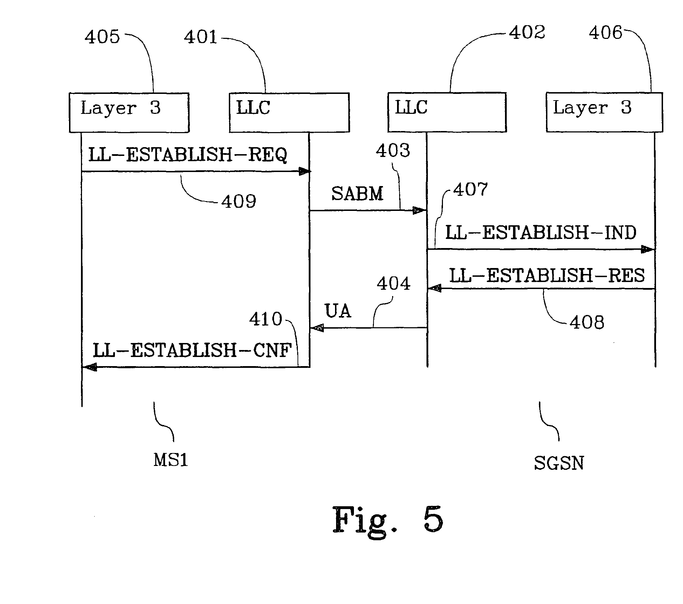

Figure 5 illustrates only one possible way that the communication of the retransmission parameters can be performed in one direction between the sending LLC entity 401 and the receiving LLC entity 402, described in the ETSI document, mentioned above, chapter 8.5.1.2. It is presumed that the communication can be performed in the reverse direction. The SABM (Set Asynchronous Balanced Mode) command which is shown as an arrow 403 is used to set up the establishment of an ABM (Asynchronous Balanced Mode) between SGSN and MS1. According to the specification mentioned above SABM command 403 will include XID parameter fields 110, originating in layer 3 405 and LCC entity 401. According to the invention the SABM command 403 shown as an arrow with its XID parameter field 110 can be used to transmit the retransmission time-out value in downlink and uplink direction, e.g. parameter T200D 315 and parameter T200U 316. Layer 3 405 sends the LL-ESTABLISH-REQ primitive which is shown as an arrow 409 to LLC entity 401. Then LLC entity 401 sends an SABM command 403 containing the XID parameter field 110. When LLC entity 402 receives SABM command 403, from LLC entity 401, then receiving LLC entity 402 shall, after sending the LL-ESTABLISH-IND primitive shown as an arrow 407 towards layer 3 406, reset T200U or T200D, if active, and wait for the LL-ESTABLISH-RES primitive shown as an arrow 408 from layer 3 406 and send back the UA (Unnumbered Acknowledgement) frame shown as an arrow 404, containing an XID parameter field 110, to the sending LLC entity 401, which shall send the LL-ESTABLISH-CNF primitive shown as an arrow 410 back to layer 3 405. When the sending LLC entity 401 receives the UA frame shown as an arrow 404 it shall reset T200U or T200D if active.

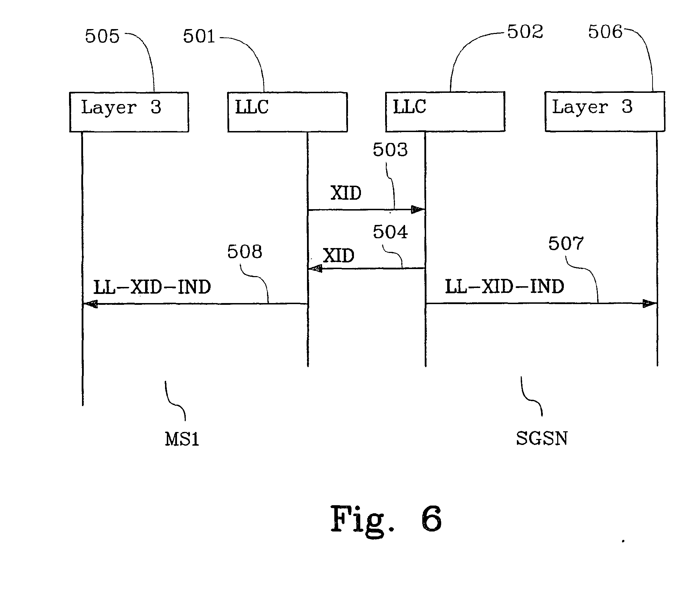

Figure 6 illustrates only another possible way of negotiation of retransmission parameters in one direction described in the ETSI document, mentioned above, chapter 8.5.3. It is presumed that the communication can be performed in the reverse direction. According to the invention the XID frame 700 shown as an arrow 503 containing the XID parameter 110 can be used to transmit the downlink retransmission time-out value, e.g. parameter T200D 315 and the uplink retransmission time-out value e.g. parameter T200U 316. The LLC entity 502 shall upon receiving the XID frame 503 from the sending LLC entity 501 send back an XID frame shown as an arrow 504 to the sending LLC entity 501. If certain layer-3 parameters have been changed according to the ETSI document, mentioned above, chapter 8.5.3 then the LL-XID-IND primitive shown as an arrow 507 shall be sent from LLC entity 502 to layer 3 506 and the LL-XID-IND primitive shown as an arrow 508 shall be sent from LLC entity 501 to layer 3 505.

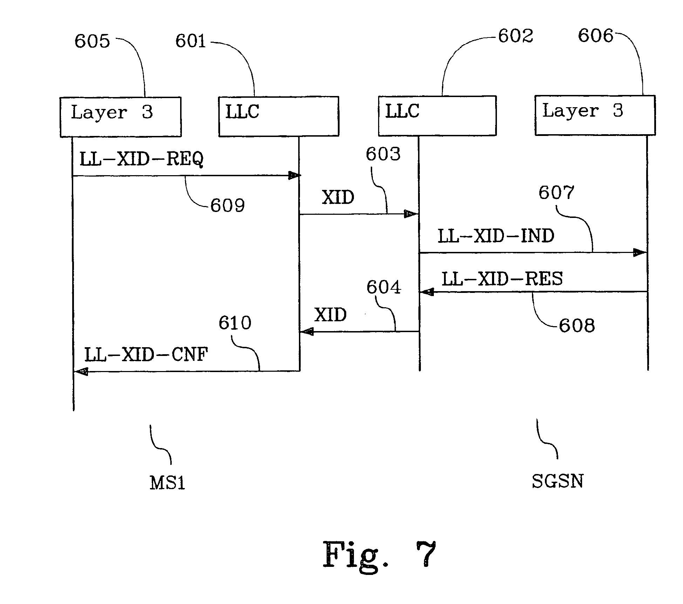

Figure 7 illustrates only one possible way of negotiation of retransmission parameters described in the ETSI document, mentioned above, chapter 8.5.3. It is presumed that the communication can be performed in the reverse direction. The layer 3 605 is initiating the negotiation of layer 3 parameters with signal LL-XID-REQ shown as an arrow 609 towards the LLC entity 601. The LLC 601 entity can send transmission parameters in the XID frame shown as an arrow 603 towards the receiving LLC entity 602. The receiving LLC entity 602 sends a LL-XID-IND shown as an arrow 607 with layer 3 parameters towards layer 3 606. Layer 3 sends back LL-XID-RES shown as an arrow 608 towards LLC entity 602. LLC entity 602 sends back an XID frame shown as an arrow 604 towards LLC entity 601 which sends LL-XID-CNF shown as an arrow 610 towards layer 3 605.

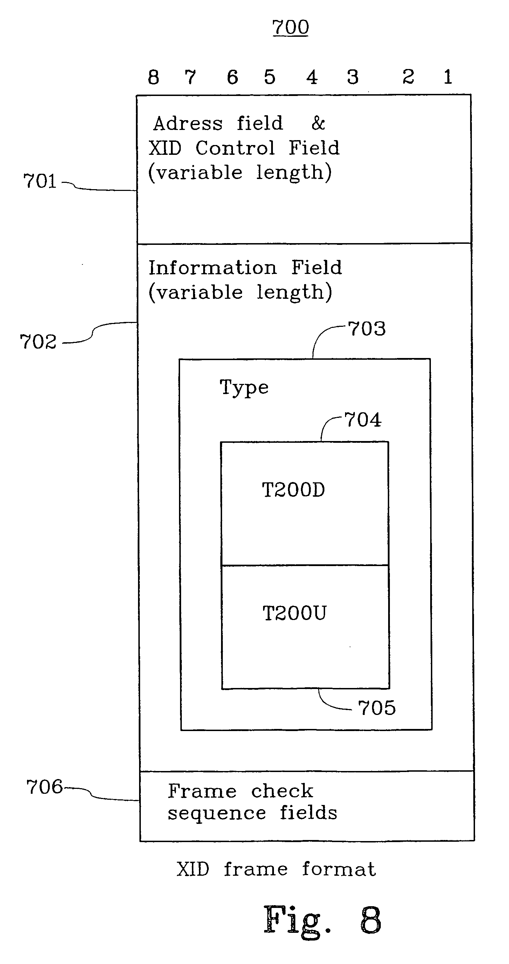

Figure 8 illustrates the XID frame format. The XID frame format 700 consists of an address field, which consists of 1 octet, and an XID control Field 701, which can consist of maximum 36 octets, and an information field 702 which consists of e.g. one or more XID parameter field formats 110 as shown in figure 2, here specifically represented by the type in field 703 which is also represented by type in field 118 in figure 2. Type in field 703 can, according to the inventive method, consists of two time-out values T200D in field 704 and T200U in field 705 which are also represented in figure 4 by T200D in field 301 and T200U in field 302. The XID frame format also consists of an end field 706 consisting of a frame check sequence field. The XID parameters are included in the XID frame format 700 which is used, among other things, in the communication between said LLC entities in figure 6 and 7 shown as arrows 503, 504, 603 and 604.

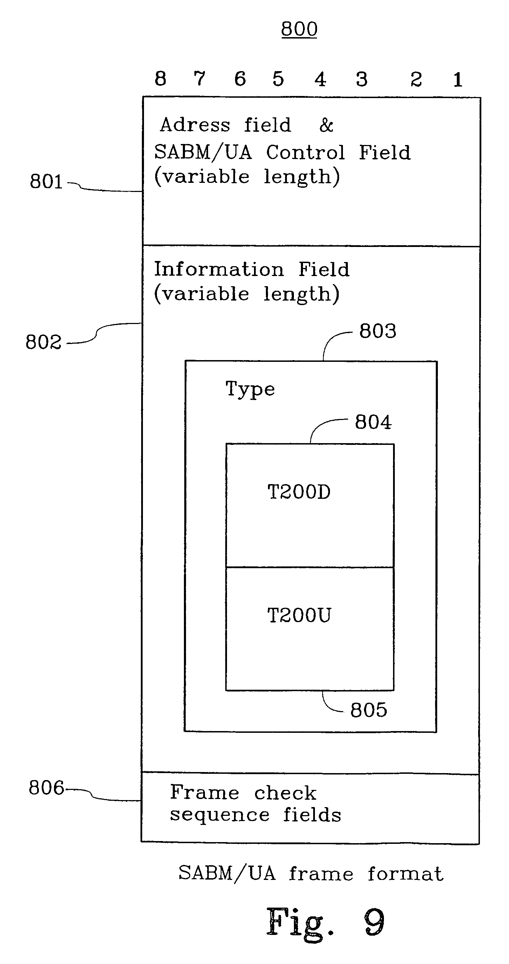

Figure 9 illustrates the SABM/UA frame format. The SABM/UA frame format 800 consists of an address field, which consists of 1 octet, and an SABM control Field 801, which can consist of maximum 36 octets, and an information field 802 which consists of e.g. one or more XID parameter field formats 110 as shown in figure 2, here specifically represented by the type in field 803 which is also represented by type in field 118 in figure 2. Type in field 803 can, according to the inventive method, consists of two time-out values T200D in field 804 and T200U in field 805 which are also represented in figure 4 by T200D in field 301 and T200U in field 302. The SABM/UA frame format also consists of an end field 806 consisting of a frame check sequence field. The XID parameters are included in the SABM/UA frame format 800 which is used, among other things, in the communication between said LLC entities in figure 5 shown as arrows 403 and 404.

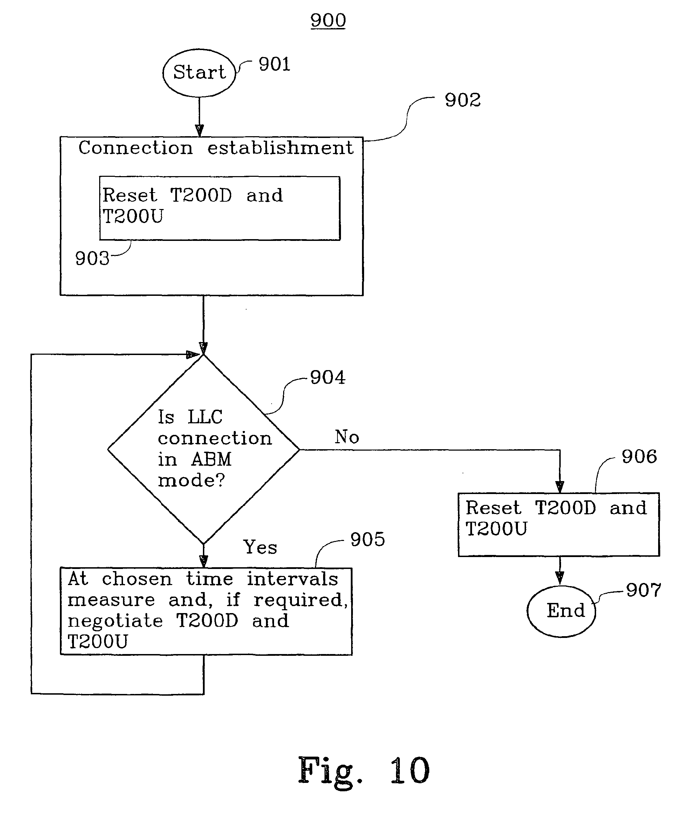

Figure 10 illustrates a flowchart 900 in which the inventive method is applied. In this example the LLC entity is initiating a connection and enters the ABM mode and negotiates the T200U and T200D parameters as is illustrated in the flowchart 900. Start, block 901, could e.g. be a connection being setup towards MS1. During the connection establishment, block 902, the T200U and T200D are reset, block 903, see also figure 5. If the answer to the question if the LLC connection is in ABM mode, block 904, is "yes" then at chosen time intervals the T200D and T200U are measured and if required negotiated, block 905, by means of activities according to figure 6 and figure 7. One example on how said measurements may be performed is to use the following procedures and frame types described in the ETSI document, mentioned above, to make measurements to support calculation of T200 values for up and downlink directions. The sending of an I-frame is suggested to be the base for the measurements as I-frames normally are the most frequently exchanged frames between LLE's. The sending entity will, when sending the I-frame, start a timer to measure the time elapsed until a response frame is received (Tm). The A-bit in the LLC control field of an I+S or S frame will be used to trigger a response from the remote LLE. All I-frames contain the Acknowledgement Request (A) bit. The A-bit set to 1 is used by an LLE to solicit an acknowledgement (i.e., an I+S or S frame) from the peer LLE. The A-bit set to 0 is used by an LLE to indicate that the peer LLE is not requested to send an acknowledgement. At the reception of the response frame, caused by the A-bit set to 1 in the I-frame command, the timer is stopped and measured and registered as Tm. T200 is calculated as measured time (Tm) plus some delta time as T200 shall be greater than the max time to receive the response.

After the measurement and, if required, negotiation, block 905, then the question if the LLC connection is in ABM mode, block 904, is performed again. If the answer to the question if the LLC connection is in ABM mode is "No" then T200D and T200U are reset, block 906 and the procedure ends, block 907.

## Claims

1. A method for communication between a first node and a second node (MS1, SGSN) in a communication system, comprising:
establishing (902) a bidirectional connection between the first and second node, wherein said bidirectional connection comprises a first communication from the first to the second node in a first direction and a second communication from the second node to the first node in a second direction; **characterized by**:
establishing (905) a first time-out value for use in the first direction and a second time-out value for use in the second direction of said bidirectional connection,
wherein said step of establishing first and second time-out values for the bidirectional connection is performed repeatedly.

2. A method according to claim 1, **characterized in that** said step of establishing first and second time-out values comprises:
measuring, at the first node, a first time interval elapsed from transmission of a protocol data unit to the second node until a protocol data unit is received in response from the second node;
measuring, at the second node, a second time interval elapsed from transmission of a protocol data unit to the first node until a protocol data unit is received in response from the first node;

3. A method according to claim 2, **characterized in that** said step of establishing first and second time-out values comprises:
calculating the first time-out value as the first time interval plus some delta time;
calculating the second time out value as the second time interval plus some delta time.

4. A method according to any one of claims 1-3, **characterized in that** a layer 2 protocol is used for communication on said bidirectional connection and said protocol data units are frames of said layer 2 protocol.

5. A method according to claim 4, **characterized in that** said establishing of the bidirectional connection includes establishing an asynchronous balanced mode and said repeated establishing of time-out values occur while operating in said asynchronous balanced mode.

6. A method according to any one of claims 1-5, **characterized in that** the first node is a mobile station and the second node is a Serving GPRS Support Node.

7. A method according to claim 6, **characterized in that** said bidirectional communication between the mobile station and the Serving GPRS Support Node employs a Logical Link Control protocol, and wherein the first time-out value corresponds to a T200 uplink time-out value and the second time-out value corresponds to a T200 downlink time-out value.

8. A communication system including a first and a second node (MS1, SGSN), said communication system comprising:
connection establishing means for establishing a bidirectional connection between the first and second node, wherein said bidirectional connection comprises a first communication from the first to the second node in a first direction and a second communication from the second node to the first node in a second direction; **characterized by**:
time-out value establishing means for establishing a first time-out value for use in the first direction and a second time-out value for use in the second direction of said bidirectional connection,
wherein said time-out value establishing means are adapted to repeatedly establish said first and second time-out values for the bidirectional connection.

9. A communication system according to claim 8, **characterized in that** said time-out value establishing means are adapted to:
measure, at the first node, a first time interval elapsed from transmission of a protocol data unit to the second node until a protocol data unit is received in response from the second node;
measure, at the second node, a second time interval elapsed from transmission of a protocol data unit to the first node until a protocol data unit is received in response from the first node;

10. A communication system according to claim 9, **characterized in that** said time-out value establishing means are adapted to:
calculate the first time-out value as the first time interval plus some delta time;
calculate the second time out value as the second time interval plus some delta time.

11. A communication system according to any one of claims 8-10, **characterized in that** a layer 2 protocol is used for communication on said bidirectional connection and said protocol data units are frames of said layer 2 protocol.

12. A communication system according to claim 11, **characterized in that** said connection establishing means are adapted to establish an asynchronous balanced mode for the bidirectional connection and said time-out value establishing means are adapted to repeatedly establish said first and second time-out values while operating in said asynchronous balanced mode.

13. A communication system according to any one of claims 8-12, **characterized in that** the first node is a mobile station and the second node is a Serving GPRS Support Node.

14. A communication system according to claim 13, **characterized in that** said bidirectional communication between the mobile station and the Serving GPRS Support Node employs a Logical Link Control protocol, and wherein the first time-out value corresponds to a T200 uplink time-out value and the second time-out value corresponds to a T200 downlink time-out value.

## Patentansprüche

1. Verfahren zur Nachrichtenübertragung zwischen einem ersten Knoten und einem zweiten Knoten (MS1, SGSN) in einem Nachrichtenübertragungssystem, umfassend:
Herstellen (902) einer bidirektionalen Verbindung zwischen dem ersten und zweiten Knoten, wobei die bidirektionale Verbindung eine erste Nachrichtenübertragung vom ersten zum zweiten Knoten in einer ersten Richtung und eine zweite Nachrichtenübertragung vom zweiten Knoten zum ersten Knoten in einer zweiten Richtung umfaßt; **gekennzeichnet durch**:
Festlegen (905) eines ersten Zeitgrenzwertes zur Verwendung in der ersten Richtung und eines zweiten Zeitgrenzwertes zur Verwendung in der zweiten Richtung der bidirektionalen Verbindung,
wobei der Schritt des Festlegens eines ersten und zweiten Zeitgrenzwertes für die bidirektionale Verbindung wiederholt durchgeführt wird.

2. Verfahren nach Anspruch 1, **dadurch gekennzeichnet, daß** der Schritt des Festlegens eines ersten und zweiten Zeitgrenzwertes umfaßt:
am ersten Knoten erfolgendes Messen eines ersten Zeitintervalls, das von der Übertragung einer Protokolldateneinheit zum zweiten Knoten, bis eine Protokolldateneinheit als Antwort vom zweiten Knoten empfangen wird, vergeht;
am zweiten Knoten erfolgendes Messen eines zweiten Zeitintervalls, das von der Übertragung einer Protokolldateneinheit zum ersten Knoten, bis eine Protokolldateneinheit als Antwort vom ersten Knoten empfangen wird, vergeht.

3. Verfahren nach Anspruch 2, **dadurch gekennzeichnet, daß** der Schritt des Festlegens eines ersten und zweiten Grenzwertes umfaßt:
Berechnen des ersten Zeitgrenzwertes als das erste Zeitintervall plus eine bestimmte Delta-Zeit;
Berechnen des zweiten Zeitgrenzwertes als das zweite Zeitintervall plus eine bestimmte Delta-Zeit.

4. Verfahren nach einem der Ansprüche 1 bis 3, **dadurch gekennzeichnet, daß** ein Schicht-2-Protokoll zur Nachrichtenübertragung auf der bidirektionalen Verbindung verwendet wird und die Protokolldateneinheiten Rahmen des Schicht-2-Protokolls sind.

5. Verfahren nach Anspruch 4, **dadurch gekennzeichnet, daß** die Herstellung der bidirektionalen Verbindung die Herstellung eines gleichberechtigten Spontanbetriebs einschließt und die wiederholte Festlegung von Zeitgrenzwerten auftritt, während im gleichberechtigten Spontanbetrieb gearbeitet wird.

6. Verfahren nach einem der Ansprüche 1 bis 5, **dadurch gekennzeichnet, daß** der erste Knoten eine Mobilstation ist und der zweite Knoten ein Serving GPRS Support Node ist.

7. Verfahren nach Anspruch 6, **dadurch gekennzeichnet, daß** die bidirektionale Nachrichtenübertragung zwischen der Mobilstation und dem Serving GPRS Support Node ein Protokoll der logischen Übertragungssteuerung verwendet und wobei der erste Zeitgrenzwert einem T200-Aufwärtsstrecken-Zeitgrenzwert entspricht und der zweite Zeitgrenzwert einem T200-Abwärtsstrecken-Zeitgrenzwert entspricht.

8. Nachrichtenübertragungssystem mit einem ersten und einem zweiten Knoten (MS1, SGSN), wobei das Nachrichtenübertragungssystem umfaßt:
Verbindungsherstellungsmittel zur Herstellung einer bidirektionalen Verbindung zwischen dem ersten und dem zweiten Knoten, wobei die bidirektionale Verbindung eine erste Nachrichtenübertragung vom ersten zum zweiten Knoten in einer ersten Richtung und eine zweite Nachrichtenübertragung vom zweiten Knoten zum ersten Knoten in einer zweiten Richtung umfaßt; **gekennzeichnet durch**:
Zeitgrenzwertfestlegungsmittel zum Festlegen eines ersten Zeitgrenzwertes zur Verwendung in der ersten Richtung und eines zweiten Zeitgrenzwertes zur Verwendung in der zweiten Richtung der bidirektionalen Verbindung,
wobei die Zeitgrenzwertfestlegungsmittel dafür eingerichtet sind, den ersten und zweiten Zeitgrenzwert für die bidirektionale Verbindung wiederholt festzulegen.

9. Nachrichtenübertragungssystem nach Anspruch 8, **dadurch gekennzeichnet, daß** die Zeitgrenzwertfestlegungsmittel dafür eingerichtet sind:
am ersten Knoten ein erstes Zeitintervall zu messen, das von der Übertragung einer Protokolldateneinheit zum zweiten Knoten, bis eine Protokolldateneinheit als Antwort vom zweiten Knoten empfangen wird, vergeht;
am zweiten Knoten ein zweites Zeitintervall zu messen, das von der Übertragung einer Protokolldateneinheit zum ersten Knoten, bis eine Protokolldateneinheit als Antwort vom ersten Knoten empfangen wird, vergeht.

10. Nachrichtenübertragungssystem nach Anspruch 9, **dadurch gekennzeichnet, daß** die Zeitgrenzwertfestlegungsmittel dafür eingerichtet sind:
den ersten Zeitgrenzwert als das erste Zeitintervall plus eine bestimmte Delta-Zeit zu berechnen;
den zweiten Zeitgrenzwert als das zweite Zeitintervall plus eine bestimmte Delta-Zeit zu berechnen.

11. Nachrichtenübertragungssystem nach einem der Ansprüche 8 bis 10, **dadurch gekennzeichnet, daß** ein Schicht-2-Protokoll zur Nachrichtenübertragung auf der bidirektionalen Verbindung verwendet wird und die Protokolldateneinheiten Rahmen des Schicht-2-Protokolls sind.

12. Nachrichtenübertragungssystem nach Anspruch 11, **dadurch gekennzeichnet, daß** die Verbindungsherstellungsmittel dafür eingerichtet sind, einen gleichberechtigten Spontanbetrieb für die bidirektionale Verbindung herzustellen, und die Zeitgrenzwertfestlegungsmittel dafür eingerichtet sind, den ersten und zweiten Zeitgrenzwert wiederholt festzulegen, während im gleichberechtigten Spontanbetrieb gearbeitet wird.

13. Nachrichtenübertragungssystem nach einem der Ansprüche 8 bis 12, **dadurch gekennzeichnet, daß** der erste Knoten eine Mobilstation ist und der zweite Knoten ein Serving GPRS Support Node ist.

14. Nachrichtenübertragungssystem nach Anspruch 13, **dadurch gekennzeichnet, daß** die bidirektionale Nachrichtenübertragung zwischen der Mobilstation und dem Serving GPRS Support Node ein Protokoll der logischen Übertragungssteuerung verwendet, und wobei der erste Zeitgrenzwert einem T200-Aufwärtsstrecken-Zeitgrenzwert entspricht und der zweite Zeitgrenzwert einem T200-Abwärtsstrecken-Zeitgrenzwert entspricht.

## Revendications

1. Procédé de communication entre un premier noeud et un second noeud (MS1, SGSN) dans un système de communication, comportant l'étape consistant à :
établir (902) une connexion bidirectionnelle entre le premier et le second noeud, où ladite connexion bidirectionnelle comprend une première communication du premier au second noeud dans une première direction et une seconde communication du second noeud au premier noeud dans une seconde direction ; **caractérisé par** les étapes consistant à :
établir (905) une première valeur de temporisation destinée à être utilisée dans la première direction et une seconde valeur de temporisation destinée à être utilisée dans la seconde direction de ladite connexion bidirectionnelle,
dans lequel, ladite étape consistant à établir des première et seconde valeurs de temporisation pour la connexion bidirectionnelle est exécutée de manière répétée.

2. Procédé selon la revendication 1, **caractérisé en ce que** ladite étape consistant à établir des première et seconde valeurs de temporisation comporte les étapes consistant à :
mesurer, au niveau du premier noeud, un premier intervalle de temps écoulé depuis une transmission d'une unité de données de protocole au second noeud jusqu'à ce qu'une unité de données de protocole soit reçue en réponse à partir du second noeud ;
mesurer, au niveau du second noeud, un second intervalle de temps écoulé depuis une transmission d'une unité de données de protocole au premier noeud jusqu'à ce qu'une unité de données de protocole soit reçue en réponse à partir du premier noeud.

3. Procédé selon la revendication 2, **caractérisé en ce que** ladite étape consistant à établir des première et seconde valeurs de temporisation comporte les étapes consistant à :
calculer la première valeur de temporisation en tant que premier intervalle de temps plus un temps delta;
calculer la seconde valeur de temporisation en tant que second intervalle de temps plus un temps delta.

4. Procédé selon l'une quelconque des revendications 1 à 3 **caractérisé en ce qu'**un protocole de couche 2 est utilisé pour une communication sur ladite connexion bidirectionnelle et **en ce que** lesdites unités de données de protocole sont des trames dudit protocole de couche 2.

5. Procédé selon la revendication 4, **caractérisé en ce que** ledit établissement de la connexion bidirectionnelle comporte l'étape consistant à établir un mode équilibré asynchrone et **en ce que** ledit établissement répété de valeurs de temporisation a lieu lors d'une exploitation dans ledit mode équilibré asynchrone.

6. Procédé selon l'une quelconque des revendications 1 à 5, **caractérisé en ce que** le premier noeud est une station mobile et le second noeud est un noeud de support GPRS de service.

7. Procédé selon la revendication 6, **caractérisé en ce que** ladite communication bidirectionnelle entre la station mobile et le noeud de support GPRS de service emploie un protocole de commande de liaison logique, et dans lequel la première valeur de temporisation correspond à une valeur de temporisation en liaison montante T200 et la seconde valeur de temporisation correspond à une valeur de temporisation en liaison descendante T200.

8. Système de communication comportant un premier et un second noeud (MS1, SGSN), ledit système de communication comportant :
des moyens d'établissement de connexion pour établir une connexion bidirectionnelle entre le premier et le second noeud, où ladite connexion bidirectionnelle comprend une première communication du premier au second noeud dans une première direction et une seconde communication du second noeud au premier noeud dans une seconde direction ; **caractérisé par** :
des moyens d'établissement de valeurs de temporisation pour établir une première valeur de temporisation destinée à être utilisée dans la première direction et une seconde valeur de temporisation destinée à être utilisée dans la seconde direction de ladite connexion bidirectionnelle,
dans lequel, lesdits moyens d'établissement de valeurs de temporisation sont aptes à établir de manière répétée lesdites première et seconde valeurs de temporisation pour la connexion bidirectionnelle.

9. Système de communication selon la revendication 8, **caractérisé en ce que** lesdits moyens d'établissement de valeurs de temporisation sont aptes à :
mesurer, au niveau du premier noeud, un premier intervalle de temps écoulé depuis une transmission d'une unité de données de protocole au second noeud jusqu'à ce qu'une unité de données de protocole soit reçue en réponse à partir du second noeud ;
mesurer, au niveau du second noeud, un second intervalle de temps écoulé depuis une transmission d'une unité de données de protocole au premier noeud jusqu'à ce qu'une unité de données de protocole soit reçue en réponse à partir du premier noeud.

10. Système de communication selon la revendication 9, **caractérisé en ce que** lesdits moyens d'établissement de valeurs de temporisation sont aptes à :
calculer la première valeur de temporisation en tant que premier intervalle de temps plus un temps delta;
calculer la seconde valeur de temporisation en tant que second intervalle de temps plus un temps delta.

11. Système de communication selon l'une quelconque des revendications 8 à 10, **caractérisé en ce qu'**un protocole de couche 2 est utilisé pour une communication sur ladite connexion bidirectionnelle et **en ce que** lesdites unités de données de protocole sont des trames dudit protocole de couche 2.

12. Système de communication selon la revendication 11, **caractérisé en ce que** lesdits moyens d'établissement de connexion sont aptes à établir un mode équilibré asynchrone pour la connexion bidirectionnelle et **en ce que** lesdits moyens d'établissement de valeurs de temporisation sont aptes à établir de manière répétée lesdites première et seconde valeurs de temporisation lors d'une exploitation dans ledit mode équilibré asynchrone.

13. Système de communication selon l'une quelconque des revendications 8 à 12, **caractérisé en ce que** le premier noeud est une station mobile et le second noeud est un noeud de support GPRS de service.

14. Système de communication selon la revendication 13, **caractérisé en ce que** ladite communication bidirectionnelle entre la station mobile et le noeud de support GPRS de service emploie un protocole de commande de liaison logique, et dans lequel la première valeur de temporisation correspond à une valeur de temporisation en liaison montante T200 et la seconde valeur de temporisation correspond à une valeur de temporisation en liaison descendante T200.
